# EUROPÄISCHE PATENTSCHRIFT

(11) **EP 2 580 800 B1**
(45) Veröffentlichungstag und Bekanntmachung des Hinweises auf die Patenterteilung: **24.12.2014**
(21) Anmeldenummer: 11715446.8
(22) Anmeldetag: 16.04.2011
(51) Int. Cl.: H01M 8/04, H01M 8/24

(54) **BRENNSTOFFZELLENSYSTEM MIT EINER IN EINEM GEHÄUSE ANGEORDNETEN BRENNSTOFFZELLE**
FUEL CELL SYSTEM HAVING A FUEL CELL ARRANGED IN A HOUSING
SYSTÈME À PILE À COMBUSTIBLE PRÉSENTANT UNE PILE À COMBUSTIBLE DISPOSÉE DANS UN BOÎTIER

(30) Priorität: 12.06.2010 DE 102010023671
(43) Veröffentlichungstag der Anmeldung: 17.04.2013
(73) Patentinhaber: Daimler AG, 70327 Stuttgart (DE)
(72) Erfinder: MERTH, Rainer, 89073 Ulm (DE); PFITZER, Stefan, 73249 Wernau (DE)
(74) Vertreter: JENSEN & SON
(86) Internationale Anmeldenummer: PCT/EP2011/001942
(87) Internationale Veröffentlichungsnummer: WO 2011/154070

(56) Entgegenhaltungen:
- WO-A1-02/01663
- WO-A1-2008/052577
- DE-A1-102006 031 866
- DE-A1-102007 042 784
- DE-A1-102008 016 578
- DE-A1-102008 016 579

## Beschreibung

Die Erfindung betrifft ein Brennstoffzellensystem mit wenigstens einer in einem Gehäuse angeordneten Brennstoffzelle nach der im Oberbegriff von Anspruch 1 näher definierten Art.

Aus dem allgemeinen Stand der Technik sind Brennstoffzellensysteme mit wenigstens einer Brennstoffzelle bekannt. Die Brennstoffzelle wird dabei häufig als Stapel von einzelnen Brennstoffzellen ausgeführt. Sie kann beispielsweise zur Erzeugung von elektrischer Antriebsenergie in einem Fahrzeug eingesetzt werden. Für diese Aufbauten ist dabei die Realisierung des Brennstoffzellenstapels aus einer Vielzahl von einzelnen Brennstoffzellen üblich. Diese können bevorzugt als PEM-Brennstoffzellen ausgebildet sein.

Derartige Brennstoffzellen oder auch andere Typen von Brennstoffzellen werden im Allgemeinen mit Wasserstoff oder einem wasserstoffhaltigen Gas als Brennstoff für eine Anodenseite der Brennstoffzelle und mit Sauerstoff oder mit dem in der Luft enthaltenen Sauerstoff auf der Kathodenseite der Brennstoffzelle versorgt. Um auf eventuelle Undichtheiten eines solchen Brennstoffzellenstapels reagieren zu können und dabei zu verhindern, dass sich explosionsfähige Gemische aus Wasserstoff beziehungsweise wasserstoffhaltigem Gas und Luft bilden, sind dabei aus dem Stand der Technik verschiedene Maßnahmen bekannt. Typischerweise wird der Brennstoffzellenstapel dazu in einem Gehäuse angeordnet. Das Gehäuse kann dann, wie es beispielsweise in der DE 10 2007 042 784 A1 beschrieben wird, von Spülluft durchströmt werden. Diese Spülluft kann dabei eventuelle geringfügige Leckagen an Wasserstoff und/oder Sauerstoff aus dem Gehäuse herausspülen und führt diese einem Bereich des Brennstoffzellensystems zu, in dem entweder eine ausreichende Verdünnung stattfindet, sodass kein explosionsfähiges Gemisch mehr vorliegt, oder in dem der Wasserstoff verbrannt oder katalytisch verbrannt wird, um so Wasserstoffemissionen und zündfähige Gemische zu vermeiden.

Dieser Aufbau, wie er beispielsweise in der oben erwähnten DE 10 2007 042 784 A1 beschrieben ist, ist dabei vergleichsweise aufwändig, da er diverse Komponenten zur Aufrechterhaltung einer Spülluftströmung benötigt.

Aus dem weiteren allgemeinen Stand der Technik bei Brennstoffzellensystemen ist es außerdem bekannt, dass die für den Kathodenbereich benötigte Zuluft über Strömungsverdichter gefördert wird. Solche Fördereinrichtungen für die Zuluft können beispielweise reine Strömungsverdichter sein, welche insbesondere elektromotorisch angetrieben sind. Es sind jedoch auch Aufbauten bekannt und üblich, bei denen ein- oder mehrstufige Fördereinrichtungen ausgebildet sind, von denen zumindest eine Stufe in der Art eines Turboladers ausgebildet ist. Ferner sind sogenannte elektrische Turbolader bekannt und üblich. Diese nutzen in einer mit einem Strömungsverdichter auf einer gemeinsamen Welle angeordneten Turbine Restenergie aus dem Bereich des Brennstoffzellensystems oder optional thermisch erzeugte Energie, zum Beispiel aus einem (katalytischen) Brenner, um damit den Strömungsverdichter anzutreiben. Gleichzeitig befindet sich auf der Welle eine Elektromaschine, welche je nach Leistungsbedarf und Angebot entweder elektromotorisch arbeitet, um den Strömungsverdichter zu unterstützen, oder generatorisch arbeitet, wenn an der Turbine mehr Leistung vorliegt als für den Strömungsverdichter benötigt wird. Eventuelle Kontaminationen dieses Zuluftstroms, beispielsweise mit Schmieröl oder Ähnlichem, könnten zu einer nachhaltigen Schädigung der Brennstoffzelle führen und sind daher unbedingt zu vermeiden. Um mit solchen Aufbauten keine Schmierölkontaminationen oder Ähnliches für den Kathodenbereich der Brennstoffzelle zu verursachen ist im allgemeinen Stand der Technik bei Brennstoffzellensystemen üblich, luftgelagerte Systeme einzusetzen, um so einen sehr reinen Zuluftstrom zum Kathodenbereich der Brennstoffzelle realisieren zu können.

Die Aufgabe der hier vorliegenden Erfindung ist es nun, ein Brennstoffzellensystem zu schaffen, welches die oben genannten Nachteile vermeidet und mit einem einfachen, kompakten und kostengünstigen Brennstoffzellensystem einen hochfunktionalen Aufbau gewährleistet.

Erfindungsgemäß wird diese Aufgabe durch die Merkmale im kennzeichnenden Teil des Anspruchs 1 gelöst. Weitere vorteilhafte Ausgestaltungen des erfindungsgemäßen Brennstoffzellensystems sind dabei in den abhängigen Unteransprüchen angegeben.

Die erfindungsgemäße Lösung sieht vor, dass der Teilluftstrom, welcher als Lagerluft und/oder Kühlluft zumindest einen Teil der Fördereinrichtung durchströmt, in Strömungsvorrichtung vor oder nach der Fördereinrichtung als Spülluft das Gehäuse der wenigstens einen Brennstoffzelle durchströmt. Bei dem erfindungsgemäßen Aufbau wird also die aus der Zuluft zu der Brennstoffzelle nach der Fördereinrichtung abgezweigte Lagerluft und/oder Kühlluft für die Fördereinrichtung genutzt, um neben zumindest eines Teils der Fördereinrichtung als Spülluft außerdem das Gehäuse der wenigstens einen Brennstoffzelle zu durchströmen. Dadurch werden in an sich bekannter Art und Weise eventuelle Leckagen und/oder zündfähige oder explosive Gemische aus eventuell austretenden Gasen der Brennstoffzelle aufgenommen und können durch die Spülluft verdünnt an die Umgebung ausgetragen werden oder werden zur anderweitigen Nutzung und/oder Nachverbrennung dafür geeigneten Komponenten zugeführt. Ohne ein zusätzliches Gebläse oder dergleichen für die Spülluft des Gehäuses zu benötigen, kann hier dennoch die volle Funktionalität aufrechterhalten werden. Dies spart eine Fördereinrichtung und die mit ihr verbundenen Kosten ebenso ein, wie von dieser Fördereinrichtung benötigten Bauraum. Das erfindungsgemäße Brennstoffzellensystem lässt sich daher kompakter, leichter und kostengünstiger als die Brennstoffzellensysteme gemäß dem Stand der Technik ausführen.

In einer weiteren besonders günstigen Ausgestaltung des erfindungsgemäßen Brennstoffzellensystems ist es außerdem vorgesehen, dass die Spülluft das Gehäuse in Strömungsrichtung nach der Fördereinrichtung durchströmt. Diese Strömungsrichtung stellt einen vergleichsweise hohen Druck im Bereich der Fördereinrichtung sicher, sodass die Lagerluft und/oder Kühlluft hier sicher und zuverlässig mit dem benötigten Druck und dem benötigten Volumenstrom ankommt. Nach dem Durchströmen der Fördereinrichtung und den dabei unvermeidlich auftretenden Druckverlusten gelangt die Spülluft dann in den Bereich des Gehäuses. Da hier typischerweise keine allzu hohen Druckverluste auftreten und keine Durchströmung mit besonders hohem Volumenstrom gefordert ist, reicht hierzu die verbleibende Strömungsenergie der Spülluft nach dem Durchströmen der Fördereinrichtung vollkommen aus, sodass insgesamt durch die Fördereinrichtung keine oder nur minimal mehr Energie aufgewendet werden muss, um das zusätzliche Durchspülen des Gehäuses mit der Spülluft zu realisieren. Der Aufbau kommt also unter Einsparung von Bauraum und Komponenten ohne oder mit nur minimalem zusätzlichem Energieaufwand gegenüber dem herkömmlichen Aufbau aus. Gegenüber einem Aufbau mit eigener Fördereinrichtung für die Spülluft lässt sich so nicht nur Bauraum und Bauvolumen, sondern auch Energie einsparen.

In einer sehr vorteilhaften Weiterbildung des erfindungsgemäßen Systems ist es außerdem vorgesehen, dass die Spülluft zwischen der Fördereinrichtung und dem Gehäuse wenigstens einen Wärmetauscher durchströmt. Dadurch kann die Temperatur im Bereich der Spülluft vor dem Eintreten in das Gehäuse entsprechend reduziert werden, um durch die Spülluft keine Erwärmung des Gehäuses und der darin befindlichen wenigstens einen Brennstoffzelle befürchten zu müssen. Dies ist insbesondere dann von Vorteil, wenn die Spülluft im Bereich der Fördereinrichtung auch Aufgaben zur Kühlung, beispielsweise eines elektromotorischen Antriebs für die Fördereinrichtung, übernommen hatte. Der Wärmetauscher kann dabei von einem gasförmigen oder flüssigen Kühlmedium durchströmt werden, um so die Spülluft abzukühlen. Das gasförmige Kühlmedium könnte beispielsweise das in einem Kühlkreislauf des Brennstoffzellensystems vorliegende Kühlmedium sein.

In einer alternativen oder ergänzenden Ausgestaltung dieser Idee der Erfindung kann es auch vorgesehen sein, dass ein Leitungselement für die Spülluft zwischen der Fördereinrichtung und dem Gehäuse vorgesehen ist, welches länger ausgebildet ist, als es zur reinen Strömungsverbindung notwendig wäre. Über ein solches bewusst länger ausgeführtes Leitungselement, welches bevorzugt in kühleren Bereichen des Brennstoffzellensystems verläuft, kann alternativ oder ergänzend zu dem oben genannten Wärmetauscher durch den längeren Strömungsweg eine Abkühlung der Spülluft vor dem Eintritt in das Gehäuse erreicht werden.

In einer günstigen Weiterbildung des erfindungsgemäßen Brennstoffzellensystems ist es ferner vorgesehen, dass die Spülluft nach dem Durchströmen des Gehäuses in einen Bereich strömt, welcher katalytisch aktives Material aufweist.

Die Zuleitung der Spülluft in einen Bereich mit katalytisch aktivem Material ist sehr gut geeignet, um eventuelle Wasserstoffemissionen, welche durch Leckagen der wenigstens einen Brennstoffzelle innerhalb des Gehäuses entstehen, abzubauen. Dadurch werden Emissionen an die Umgebung vermieden und es kommt sicher und zuverlässig nicht zu einem zündfähigen Gemisch, welches eine potentielle Gefährdung darstellt. Der Bereich mit dem katalytisch aktiven Material kann dabei unterschiedlich ausgestaltet sein. Es ist beispielsweise denkbar, wie aus dem Stand der Technik bekannt, einen Rekombinator einzusetzen, welcher lediglich dazu dient, den in der Spülluft gegebenenfalls enthaltenen Wasserstoff aufzubrauchen beziehungsweise mit Luftsauerstoff zu Wasser umzusetzen. Alternativ oder ergänzend hierzu ist es möglich, die Spülluft nach dem Durchströmen des Gehäuses beispielsweise der Zuluft zu dem Kathodenbereich zuzuführen. Da im Kathodenbereich der Elektrokatalysator der wenigstens einen Brennstoffzelle als katalytisch aktives Material vorhanden ist, können auch hier die mit der Spülluft transportierten minimalen Mengen an Wasserstoff abreagieren, ohne die Performance der Brennstoffzelle nachteilig zu beeinflussen. Da dieser Katalysator ohnehin vorhanden sein muss, um die elektrochemische Funktionalität der Brennstoffzelle aufrechtzuerhalten, kann mit diesem Aufbau ein eigens für das Abreagieren der Spülluft vorgesehener Katalysator eingespart werden. Da beispielsweise beim Einsatz von Platin als Katalysator mit dem Katalysator vergleichsweise hohe Kosten verbunden sind, entsteht so ein deutlicher Kostenvorteil. Außerdem ergibt sich ein Vorteil hinsichtlich des Bauraums und des Gewichts. Alternativ dazu kann aber auch ein katalytischer Brenner genutzt werden, welcher beispielsweise so ausgestaltet ist, dass Abgase aus dem Anodenbereich und dem Kathodenbereich in diesem verbrennen und die heißen Abgase einen Expander antreiben, welcher beispielsweise mit der Fördereinrichtung kombiniert ist, wie dies oben bereits beschrieben wurde. Bei einem solchen Aufbau kann dann diesem katalytischen Brenner auch die Spülluft zugeführt werden. Auch so kann ohne zusätzliches katalytisch aktives Material zu benötigen erreicht werden, dass keine Wasserstoffemissionen mit der Spülluft an die Umgebung gelangen.

In einer vorteilhaften Ausgestaltung des erfindungsgemäßen Brennstoffzellensystems kann es außerdem vorgesehen sein, dass die Spülluft in Strömungsrichtung vor und/oder nach dem Gehäuse und/oder der Fördereinrichtung weitere zu kühlende und/oder zu wärmende Komponenten durchströmt. Die Spülluft wird sich beim Durchströmen der Fördereinrichtung als Lagerluft oder Kühlluft entsprechend erwärmen und sollte im Normalfall mit keiner allzuhohen Temperatur im Bereich des Gehäuses anlagen. Sie kann daher zuvor beispielsweise zur Erwärmung von zu erwärmenden Komponenten genutzt werden. Die ohnehin als Teilstrom oder Zuluft abgezweigte Kühlluft kann alternativ oder ergänzend hierzu aber auch zum Kühlen von weiteren Komponenten genutzt werden.

Insbesondere im Kaltstartfall des Brennstoffzellensystems kann die Spülluft, welche sich als Lagerluft und/oder Kühlluft der Fördereinrichtung typischerweise erwärmt, ohne zwischengeschalteten oder aktiven Wärmetauscher oder andere zu erwärmende Komponenten dazu genutzt werden, den Brennstoffzellenstack innerhalb seines Gehäuses mit aufzuwärmen. Dadurch lässt sich die Kaltstartzeit für das Brennstoffzellensystem entsprechend verkürzen, ohne hierfür zusätzliche Energie bereitstellen zu müssen. Nach erfolgtem Kaltstart kann dann beispielsweise durch ein Aktivieren durch Durchströmen des oben beschriebenen optionalen Wärmetauschers mit einem Kühlmedium, beispielsweise einem gasförmigen oder einem flüssigen Kühlmedium, ein Abkühlen der Spülluft vor dem Eintritt in das Gehäuse erfolgen, um so während des regulären Betriebs keine unnötige Wärme in den Bereich des Brennstoffzellenstapels einzutragen.

In einer günstigen Weiterbildung des erfindungsgemäßen Brennstoffzellensystems ist es außerdem vorgesehen, dass die Fördereinrichtung eine elektrische Maschine und einen Expander aufweist. Diese Ausgestaltung der Fördereinrichtung wird auch als elektrischer Turbolader beschrieben und ist an sich aus dem Stand der Technik bekannt. Der Expander nutzt dabei in den Abgasen der Brennstoffzelle vorhandene Energie, um so die über die elektrische Maschine als Motor aufgebrachte Antriebsleistung für die Fördereinrichtung zu reduzieren. Bei hoher am Expander vorliegender Leistung und geringem Verbrauch der Fördereinrichtung kann die elektrische Maschine auch generatorisch betrieben werden, um die durch den Expander zurückgewonnene Energie in elektrische Energie umzuwandeln.

In einer weiteren sehr günstigen Ausgestaltung ist es dabei vorgesehen, dass der Expander Abgas oder wenigstens eine Brennstoffzelle entspannt, wobei die Abgase in Strömungsrichtung vor dem Expander einen Brenner durchströmen. In einem solchen Brenner, welcher beispielsweise als Porenbrenner oder in einer bevorzugten Weiterbildung als katalytischer Brenner ausgebildet sein kann, können die Abgase der Brennstoffzelle verbrannt werden. Diese enthalten auf jeden Fall Restsauerstoff in der Abluft aus der Kathode. Ferner ist in den Abgasen je nach Aufbau und Typ der Brennstoffzelle zumindest noch eine Restmenge an Wasserstoff enthalten, beispielsweise wenn das Anodenabgas im Kreislauf um die Anode geführt wird. Dann ist von Zeit zu Zeit ein Ablassen des im Kreislauf befindlichen Gases notwendig, um durch die stattfindende Anreicherung von Inertgasen die Wasserstoffkonzentration im Anodenbereich nicht unter einen bestimmten Wert abfallen zu lassen. In diesem Fall ist in dem abgelassenen Gas Wasserstoff enthalten, welcher zusammen mit dem Restsauerstoff in der Luft verbrannt werden kann. Bei einem alternativen Aufbau des Anodenbereichs ohne Kreislauf wird im Anodenbereich typischerweise Wasserstoff in einem gewissen Überschuss zugeführt, um eine gleichmäßige Anströmung der verfügbaren aktiven Fläche zu erreichen. In diesem Fall enthält das Anodenabgas dann kontinuierlich eine gewisse Restmenge an Wasserstoff, welche mit dem Restsauerstoff in der Kathodenabluft verbrannt werden kann. Dieser Verbrennung kann, wie oben bereits erwähnt, außerdem die Spülluft nach dem Gehäuse zugeführt werden. In dieser eventuell enthaltener Wasserstoff wird so mit verbrannt. Durch die Verbrennung entstehen heiße Abgase, welche beim Entspannen im Expander mehr Energie abgeben, als wenn dieser lediglich den Überdruck in den Abgasen zur Rückgewinnung von Energie nutzt.

In einer weiteren sehr günstigen Ausgestaltung dieser Idee kann es ferner vorgesehen sein, dass dem Brenner optionaler Brennstoff zuführbar ist. Dieser Aufbau erlaubt es über optionalen Brennstoff, beispielsweise Wasserstoff oder einen Ausgangsstoff zur Herstellung von Wasserstoff, welcher in dem Brennstoffzellensystem mitgeführt wird, den Brenner optional zu beheizen. Auf diese Art kann eine vergleichsweise hohe thermische Energie im Bereich des Expanders bereitgestellt werden. Die so über den Expander gewonnene Leistung kann dann in der elektrischen Maschine in elektrische Leistung umgewandelt werden, welche beispielsweise dazu genutzt werden kann, kurzzeitige Leistungsspitzen, wie sie insbesondere beim Beschleunigen eines mit einem solchen Brennstoffzellensystem ausgestatteten Fahrzeugs auftreten können, mit abzudecken. Über den Expander und den Brenner kann durch den optionalen Brennstoff also eine Boost-Funktion realisiert werden.

Weitere vorteilhafte Ausgestaltungen ergeben sich aus den restlichen Unteransprüchen und werden anhand des Ausführungsbeispiels deutlich, welches nachfolgend unter Bezugnahme auf die Figuren näher beschrieben wird.

Dabei zeigen:
- Fig. 1: ein Brennstoffzellensystem in einer ersten möglichen Ausführungsform gemäß der Erfindung; und
- Fig. 2: eine alternative Ausführungsform des Brennstoffzellensystems.

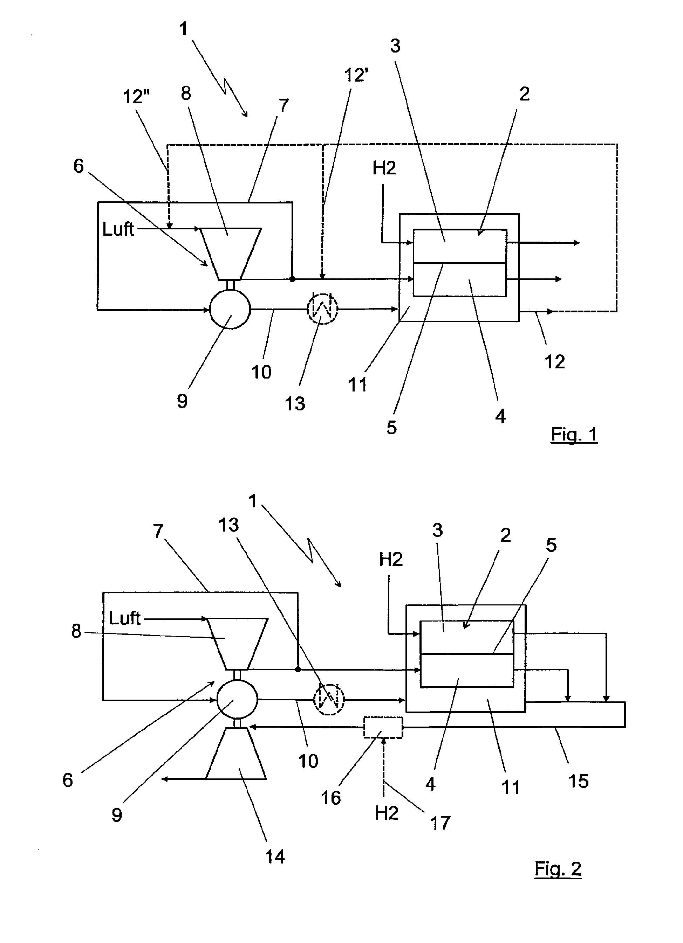

Der in Figur 1 dargestellte Aufbau zeigt den für die hier vorliegende Erfindung relevanten Ausschnitt aus einem Brennstoffzellensystem 1. Dieses weist eine Brennstoffzelle 2 auf, welche hier beispielhaft als Stapel aus einzelnen PEM-Brennstoffzellen aufgebaut sein soll. Die Brennstoffzelle 2 unterteilt sich daher in einen Anodenbereich 3 und einen Kathodenbereich 4, welche von den Membranen 5 voneinander getrennt werden. Dem Anodenbereich 3 wird dabei in an sich bekannter Art und Weise Wasserstoff H2 zugeführt, beispielsweise aus einem nicht näher dargestellten Druckgasspeicher. Der Wasserstoff H2 durchströmt den Anodenbereich 3 und gelangt dann beispielsweise über eine hier nicht dargestellte Anodenloop zurück in den Eingangsbereich des Anodenbereichs 3. Alternativ dazu kann er auch aus dem Anodenbereich 3 abströmen und anderweitig verwendet werden. Prinzipiell ist auch der Aufbau des Anodenbereichs 3 so denkbar, dass dieser den in ihn einströmenden Wasserstoff vollkommen umsetzt. Da dies für die hier vorliegende Erfindung nicht weiter von Bedeutung ist, wurde in den beiden Figuren lediglich eine Durchströmung des Anodenbereichs 3 mit Wasserstoff dargestellt, wobei auf die Darstellung eines Anodenkreislaufs oder Ähnliches verzichtet wurde. Die Erfindung kann jedoch selbstverständlich auch mit derartigen Aufbauten entsprechend kombiniert werden beziehungsweise umfasst diese Aufbauten für den Fachmann ersichtlich mit.

Dem Kathodenbereich 4 der Brennstoffzelle 2 wird über eine Fördereinrichtung 6 Luft zugeführt. Die zugeführte Luft kann dabei vor der Fördereinrichtung 6 beispielsweise einen Luftfilter und nach der Fördereinrichtung 6 außerdem einen Ladeluftkühler und/oder einen Befeuchter durchströmen. Auch dies ist für die Erfindung nicht weiter relevant und wurde daher in den Figuren so nicht dargestellt. Es ist für den Fachmann jedoch ersichtlich, dass auch diese Aufbauten hier in beliebiger Kombination analog vorhanden sein können.

Der Zuluft zu dem Kathodenbereich 4 wird in Strömungsrichtung nach einem Verdichter 8 der Fördereinrichtung 6 ein Teilluftstrom entnommen. Dieser Teilluftstrom strömt durch die in den Figuren mit 7 bezeichnete Leitung in den Bereich der Fördereinrichtung 6. Die Leitung 7 kann dabei prinzipiell in beliebiger Art und Weise ausgeführt sein. Insbesondere kann sie auch als interne Leitung 7 im Gehäuse der Fördereinrichtung 6 ausgebildet sein und so den Teilluftstrom direkt innerhalb der Fördereinrichtung 6 führen.

Dieser Aufbau, wie er in Figur 1 dargestellt ist, ist dabei rein beispielhaft zu verstehen. Der über die Leitung 7 abgezweigte Teilluftstrom soll im Bereich der Fördereinrichtung 6 insbesondere als Lagerluft zum Durchströmen von Luftlagern des Verdichters 8 der Fördereinrichtung 6 dienen. Außerdem kann der Teilluftstrom als Kühlluft beispielsweise für einen elektromotorischen Antrieb 9 der Fördereinrichtung 6 genutzt werden. Der Teilluftstrom strömt dann nach dem Durchströmen der Fördereinrichtung 6 beziehungsweise eines Teils der Fördereinrichtung 6 über ein mit 10 bezeichnetes Leitungselement weiter in ein Gehäuse 11, welches die Brennstoffzelle 2 umgibt. Dieses Gehäuse 11 hat dabei die Aufgabe, die Brennstoffzelle 2 einerseits mechanisch zu schützen und andererseits den Aufbau der Brennstoffzelle 2 sicher abzudichten, sodass aus der Brennstoffzelle 2 eventuell austretende Emissionen nicht an die Umgebung gelangen. Der nach dem Durchströmen zumindest eines Teils der Fördereinrichtung 6 über das Leitungselement 10 in den Bereich des Gehäuses 11 einströmende Teilluftstrom dient hier nun als Spülluft, um das Gehäuse 11 zu durchspülen und so eventuelle Wasserstoffemissionen oder auch andere Emissionen aus dem Gehäuse 11 auszutragen. Dieser Austrag von Emissionen kann dabei entweder direkt an die Umgebung erfolgen, wie es durch den mit 12 bezeichneten durchgezogenen Leitungsabschnitt angedeutet ist. Alternativ oder ergänzend hierzu kann die Spülluft nach dem Durchströmen des Gehäuses 11 auch über die mit 12' und 12" bezeichneten Leitungsabschnitt in den Bereich der zu dem Kathodenbereich 4 strömenden Zuluft, entweder vor oder nach der Fördereinrichtung 6, zurückgeführt werden. Zusammen mit der zum Kathodenbereich 4 strömenden Zuluft kann die Spülluft dann die Sauerstoffversorgung der Brennstoffzelle 2 übernehmen. Eventuell austretender Wasserstoff, welcher von der Spülluft mitgenommen wird, kann dabei im Bereich der im Kathodenbereich 4 ohnehin vorhandenen Elektrokatalysatoren abreagieren, sodass keine schädlichen Emissionen an die Umgebung gelangen und insbesondere keine zündfähigen oder gar explosiven Gemische in der Umgebung des Brennstoffzellensystems 1 entstehen.

Die Leitungsabschnitte 12' und 12" könnten dabei insbesondere mit einer Ablassleitung eines Anodenkreislaufs kombiniert werden, da auch hier häufig die abgelassenen Gase in den Kathodenbereich 4 geleitet werden, sodass in den aus einem solchen Anodenkreislauf abgelassenen Gasen enthaltener Wasserstoff im Bereich der Elektrokatalysatoren des Kathodenbereichs 4 abreagiert.

In der Darstellung der Figur 1 ist nun außerdem ein optionaler Wärmetauscher 13 zu erkennen. Dieser optionale Wärmetauscher 13 kann beispielsweise als Luft/Luft-Wärmetauscher ausgebildet sein oder von einem flüssigen Kühlmedium, beispielsweise dem Kühlmedium im Kühlkreislauf der Brennstoffzelle 2 durchströmt werden. Er dient dazu die Spülluft im Bereich des Leitungselements 10 abzukühlen, um so im Bereich der Fördereinrichtung 6 in die Spülluft eingetragene Wärme aus dieser zu entfernen, sodass durch die Spülluft keine zusätzliche/unnötige Erwärmung der Brennstoffzelle 2 erfolgt.

Insbesondere bei der Einbindung des optionalen Wärmetauschers 13 in den Kühlkreislauf der Brennstoffzelle 2 kann es nun ferner vorgesehen sein, dass dieser so geschaltet ist, dass er nur bei Bedarf von einem Kühlmedium durchströmt wird. Im Kaltstartfall eines solchen Brennstoffzellensystems 1 kann dann die nach dem zumindest teilweisen Durchströmen der Fördereinrichtung 6 erwärmte Spülluft dazu genutzt werden, die in dem Gehäuse 11 befindliche Brennstoffzelle 2 anzuwärmen. Ohne zusätzlichen Energiebedarf kann so eine schnellere Erwärmung der Brennstoffzelle 2 und damit ein schnellerer Kaltstart des Brennstoffzellensystems 1 realisiert werden.

Alternativ oder ergänzend hierzu kann die Spülluft beispielsweise im Bereich des Leitungselements 10 auch dazu genutzt werden, andere zu erwärmende und/oder zu kühlende Komponenten zu durchströmen. Insbesondere sollte dafür die Reihenfolge der zu erwärmenden und/oder zu kühlenden Komponenten so gewählt werden, dass im regulären Betrieb eine Spülluft mit zulässiger Temperatur am Eintritt in das Gehäuse 11 anlangt.

In der Darstellung der Figur 2 ist nun eine alternative Ausführungsform des Brennstoffzellensystems 1 zu erkennen. Dabei sind die mit denselben Bezugszeichen versehene Komponenten ebenso zu verstehen, wie die soeben beschriebenen Komponenten. Der Aufbau sieht es nun vor, dass die Abgase aus dem Kathodenbereich 4 und dem Anodenbereich 3 miteinander vermischt werden und im Bereich eines Expanders 14 entspannt werden. Die Fördereinrichtung 6 ist in diesem in Figur 2 dargestellten Ausführungsbeispiel also als elektrischer Turbolader (Electric Turbo Charger = ETC) aufgebaut. Dieser Aufbau kann dabei die in den Abgasen befindliche Druckenergie im Bereich des Expanders 14 nutzen, um so zumindest einen Teil der im Bereich des Verdichters 8 aufgebrachten Energie wieder zurückzugewinnen. Ansonsten ist der Aufbau hinsichtlich der Spülluft mit dem oben beschriebenen Aufbau zu vergleichen. Die Spülluft gelangt nach dem Durchströmen des Gehäuses 11 über einen mit 15 bezeichneten Leitungsabschnitt zusammen mit dem Abgas aus dem Anodenbereich 3 und dem Kathodenbereich 4 zu dem Expander 14. Auch hier kann wiederum unter dem Abgas aus dem Anodenbereich 3 entweder das Abgas aus einem kontinuierlich durchströmten Anodenbereich verstanden werden oder das aus einem Anodenkreislauf von Zeit zu Zeit abgelassene Abgas.

In der Darstellung der Figur 2 ist außerdem ein optionaler Brenner 16 dargestellt. Dieser optionale Brenner 16 in Strömungsrichtung der vermischten Abgase vor dem Expander 14 kann beispielsweise als Porenbrenner oder insbesondere auch als katalytischer Brenner ausgebildet sein. Er dient dazu, die in der Spülluft und den Abgasen enthaltenen brennbaren Reststoffe, beispielsweise Restsauerstoff und Wasserstoff, thermisch umzusetzen und so ein höheres Temperaturniveau der Abgase vor dem Eintritt in den Expander 14 bereitzustellen. Über dieses höhere Temperaturniveau können nicht nur die Druckunterschiede im Bereich des Expanders zurückgewonnen werden, sondern auch chemisch mit dem Abgas gebundene Energie lässt sich so zumindest teilweise über den Expander 14 umwandeln. Dem Brenner 16 kann in bestimmten Betriebszuständen außerdem optionaler Brennstoff zugeführt werden. Dies ist in der Darstellung der Figur 2 über den Pfeil 17 entsprechend angedeutet. Dem Brenner 16 wird dabei beispielsweise der Wasserstoff H2 zugeführt, welcher auch zum Betreiben der Brennstoffzelle 2 genutzt wird.

Bei dem Brennstoffzellensystem 1 beziehungsweise in einem durch das Brennstoffzellensystem 1 elektrisch versorgten System, insbesondere einem elektrischen Antriebsstrang eines Fahrzeugs, kann es zu dynamischen Leistungsanforderungen kommen. Von Zeit zu Zeit sind dabei, beispielsweise beim Beschleunigen des Fahrzeugs, entsprechende Leistungsspitzen zu decken. Da die Brennstoffzelle 2 selbst keine so hohe Dynamik hat, ist es schwer, diese über die Brennstoffzelle 2 selbst zeitnah abzudecken. Es kann jedoch für die Zwischenzeit durch die Zufuhr von optionalem Wasserstoff H2 zu dem Brenner 16 eine vergleichsweise hohe thermische Energie in den Abgasen bereitgestellt werden. Dadurch kann über den Expander 14 zumindest kurzzeitig sehr viel Leistung gewonnen werden, welche dann über die elektrische Maschine 9, welche dann als Generator benutzt wird, in elektrische Energie umgewandelt wird. Über die am Expander 14 bereitgestellte Leistung wird also nicht nur der Verdichter 8 angetrieben, sondern es wird gleichzeitig elektrische Leistung über die generatorisch betriebene elektrische Maschine 9 erzeugt. Dadurch lässt sich ein elektrischer Boost-Effekt erzielen und es kann sehr dynamisch ein großer und schneller Anstieg an elektrischer Leistung befriedigt werden.

Alles in allem nutzen die beiden in Figuren 1 und 2 dargestellten Aufbauten dabei ohnehin schon vorhandene Medienströme, welche als Lagerluft oder Kühlluft im Bereich der Fördereinrichtung 6 beziehungsweise der als ETC ausgebildeten Fördereinrichtung 6 benötigt werden, um diese anderweitig mit zu verwenden und sie als Spülluft für das Gehäuse 11 der Brennstoffzelle 2 zu nutzen. Dadurch werden Bauteile, Bauraum und Gewicht eingespart. Letztlich unterstützt dies den Aufbau des Brennstoffzellensystems 1 als ein kostengünstiges und energieeffizientes System.

Dabei sind verschiedene Aspekte der in den Figuren 1 und 2 gezeigten Ausführungsbeispiele selbstverständlich untereinander kombinierbar, sodass auch in der Ausführungsform gemäß Figur 1 ein Expander 14 und ein optionaler Brenner 16 eingesetzt werden könnten. Ebenso kann ein Teil des Abgases auch bei der Ausführung im Rahmen der Figur 2 entweder in den Bereich der Zuluftkathode, vor oder nach der Fördereinrichtung 6, oder an die Umgebung abgeleitet werden.

## Patentansprüche

1. Brennstoffzellensystem mit wenigstens einer in einem Gehäuse angeordneten Brennstoffzelle und mit einer Fördereinrichtung zur Luftzufuhr für einen Kathodenbereich der Brennstoffzelle, wobei aus der Zuluft zur Brennstoffzelle nach der Fördereinrichtung ein Teilluftstrom abgezweigt ist, welcher als Lagerluft- und/oder Kühlluft zumindest einen Teil der Fördereinrichtung durchströmt,
**dadurch gekennzeichnet, dass**
der Teilluftstrom in Strömungsrichtung vor oder nach der Fördereinrichtung (6) als Spülluft das Gehäuse (11) der wenigstens einen Brennstoffzelle (2) durchströmt.

2. Brennstoffzellensystem nach Anspruch 1,
**dadurch gekennzeichnet, dass**
die Spülluft das Gehäuse (11) in Strömungsrichtung nach der Fördereinrichtung (6) durchströmt.

3. Brennstoffzellensystem nach Anspruch 2,
**dadurch gekennzeichnet, dass**
die Spülluft zwischen der Fördereinrichtung (6) und dem Gehäuse (11) einen Wärmetauscher (13) durchströmt.

4. Brennstoffzellensystem nach Anspruch 2 oder 3,
**dadurch gekennzeichnet, dass**
ein Leitungselement (10) für die Spülluft zwischen der Fördereinrichtung (6) und dem Gehäuse (11) länger ausgebildet ist, als zur reinen Strömungsverbindung notwendig.

5. Brennstoffzellensystem nach einem der Ansprüche 1 bis 4,
**dadurch gekennzeichnet, dass**
die Spülluft nach dem Durchströmen des Gehäuses (11) in einen Bereich (4, 16) strömt, welcher katalytisch aktives Material aufweist.

6. Brennstoffzellensystem nach einem der Ansprüche 1 bis 5,
**dadurch gekennzeichnet, dass**
die Spülluft in Strömungsrichtung vor und/oder nach dem Gehäuse (11) und/oder der Fördereinrichtung (6) weitere zu kühlende und/oder zu wärmende Komponenten durchströmt.

7. Brennstoffzellensystem nach einem der Ansprüche 1 bis 6,
**dadurch gekennzeichnet dass**
die Fördereinrichtung (6) eine elektrische Maschine (8) und einen Expander (14) aufweist.

8. Brennstoffzellensystem nach Anspruch 7,
**dadurch gekennzeichnet, dass**
der Expander (14) Abgas der wenigstens einen Brennstoffzelle (2) entspannt, wobei die Abgase in Strömungsrichtung vor dem Expander (14) einen Brenner (16) durchströmen.

9. Brennstoffzellensystem nach Anspruch 8,
**dadurch gekennzeichnet, dass**
der Brenner (16) als katalytischer Brenner ausgebildet ist.

10. Brennstoffzellensystem nach Anspruch 8 oder 9,
**dadurch gekennzeichnet, dass**
dem Brenner (16) optionaler Brennstoff (H2) zuführbar ist.

## Claims

1. Fuel cell system, comprising at least one fuel cell located in a housing and a delivery device for an air supply for a cathode compartment of the fuel cell, wherein a partial air stream flowing as bearing air and/or cooling air through at least a part of the delivery device is branched off the supply air for the fuel cell downstream of the delivery device,
**characterised in that**
the partial air stream flows through the housing (11) of the at least one fuel cell (2) upstream or downstream of the delivery device (6) to act as purge air.

2. Fuel cell system according to claim 1,
**characterised in that**
the purge air flows through the housing (11) downstream of the delivery device (6) in the direction of flow.

3. Fuel cell system according to claim 2,
**characterised in that**
the purge air flows through a heat exchanger (13) between the delivery device (6) and the housing (11).

4. Fuel cell system according to claim 2 or 3,
**characterised in that**
a line element (10) for the purge air between the delivery device (6) and the housing (11) is designed to be longer than would be necessary for a flow connection only.

5. Fuel cell system according to any of claims 1 to 4,
**characterised in that**
after flowing through the housing (11), the purge air flows into a region (4, 16) which contains a catalytically active material.

6. Fuel cell system according to any of claims 1 to 5,
**characterised in that**
the purge air flows through further components to be cooled and/or to be heated upstream and/or downstream of the housing (11) and/or the delivery device (6) in the direction of flow.

7. Fuel cell system according to any of claims 1 to 6,
**characterised in that**
the delivery device (6) comprises an electric machine (8) and an expander (14).

8. Fuel ell system according to claim 7,
**characterised in that**
the expander (14) expands exhaust gas of the at least one fuel cell (2), the exhaust gases flowing through a burner (16) upstream of the expander (14) in the direction of flow.

9. Fuel ell system according to claim 8,
**characterised in that**
the burner (16) is designed as a catalytic burner.

10. Fuel ell system according to claim 8 or 9,
**characterised in that**
an optimum fuel (H2) can be supplied to the burner (16).

## Revendications

1. Système de pile à combustible doté d'au moins une pile à combustible disposée dans un boîtier et d'un et un dispositif de transport destiné à l'alimentation en air d'une zone cathodique de cette pile à combustible, un flux d'air partiel, qui s'écoule au travers d'au moins une partie du dispositif de transport en tant qu'air de palier et/ou air de refroidissement, est dévié de l'air alimenté dans la pile à combustible, en aval du dispositif de transport, **caractérisé en ce que** le flux d'air partiel traverse le boîtier (11) de la pile à combustible (2) en tant qu'air de purge dans le sens de l'écoulement, en amont ou en aval du dispositif de transport (6).

2. Système de pile à combustible selon la revendication 1, **caractérisé en ce que** l'air de purge traverse le boîtier (11) dans le sens de l'écoulement, en aval du dispositif de transport (6).

3. Système de pile à combustible selon la revendication 2, **caractérisé en ce que** l'air de purge traverse un échangeur thermique (13) entre le dispositif de transport (6) et le boîtier (11).

4. Système de pile à combustible selon la revendication 2 ou la revendication 3, **caractérisé en ce qu'**un élément de conduite (10) pour l'air de purge entre le dispositif de transport (6) et le boîtier (11) est plus long que nécessaire pour la liaison d'écoulement.

5. Système de pile à combustible selon l'une quelconque des revendications 1 à 4, **caractérisé en ce que** l'air de purge, après avoir traversé le boîtier (11), s'écoule dans une zone (4, 16) constituée en matériau catalytiquement actif.

6. Système de pile à combustible selon l'une quelconque des revendications 1 à 5, **caractérisé en ce que** l'air de purge dans le sens de d'écoulement en amont et/ou en aval du boîtier (11) et/ou du dispositif de transport (6) traverse d'autres éléments devant être refroidis et/ou réchauffés.

7. Système de pile à combustible (1) selon l'une quelconque des revendications 1 à 6, **caractérisé en ce que** le dispositif de transport présente une machine électrique (8) et un expanseur (14).

8. Système de pile à combustible selon la revendication 7, **caractérisé en ce que** l'expanseur (14) dilate les gaz d'échappement de l'au moins une pile à combustible (2), les gaz d'échappement traversant un brûleur (16) dans le sens de l'écoulement en amont de l'expanseur (14).

9. Système de piles à combustible selon la revendication 8, **caractérisé en ce que** le brûleur (16) est conçu en tant que brûleur catalytique.

10. Système de piles à combustible selon la revendication 8 ou la revendication 9, **caractérisé en ce que** le brûleur (16) peut être alimenté en combustible (H2) supplémentaire.
